# EUROPEAN PATENT APPLICATION

(11) **EP 1 006 045 A2**
(43) Date of publication of application: **07.06.2000**
(21) Application number: 99120749.9
(22) Date of filing: 20.10.1999
(51) Int. Cl.: B62K 25/04, F16F 13/00, F16F 9/00

(54) **Shock absorber or telescopic suspension**

(30) Priority: 03.12.1998 IT BO980684
(71) Applicant: Marzocchi S.p.A., 40069 Lavino di Zola Predosa (Bologna) (IT)
(72) Inventor: Marzocchi, Paolo, 40135 Bologna (IT); Vignocchi, Loris, 40069 Zola Predosa, Prov. of Bologna (IT); Musiani, Sandro, 40043 Marzabotto, Prov. of Bologna (IT)
(74) Representative: Porsia, Dino, Dr.

(57) **Abstract**

The shock absorber comprises a compensator consisting of at least one flexible and preferably elastic braiding (8), mounted outside onto the cylinder (1) of the shock absorber, seal-fastened with its own ends onto said cylinder by means of suitable fastening means (9, 10) and constructed in such a way as to define at its interior a chamber with variable volume (C) occupied by oil and communicating with at least one of the inside chambers of the shock absorber, for instance with the chamber with the larger volume, by means of holes provided on said cylinder.

## Description

The present invention relates to shock absorbers and to telescopic suspensions in general, both hydraulic and hydropneumatic, equipped with a compensator to compensate the various volume changes in the chambers placed opposite the piston in the telescopic system when one of such chambers is engaged by a stem fastened to the piston of the telescopic system. The compensator is connected to one of the inside chambers of the telescopic system, usually to the one with the larger volume. In some cases compensators are mounted at the interior and on the bottom of said chamber with the larger volume, with the inconvenience of increasing the overall length of the telescopic system, and more often they are placed outside, laterally or even in a distant position from the telescopic system itself, with a flexible pipe representing the connection to said chamber with the larger volume. Compensators of the known type substantially consist of a chamber divided into two portions by a piston with lateral seal, or by a membrane made of flexible and possibly elastic material, one portion of said chamber being filled with oil and connected to the chamber with the larger volume of the telescopic system, whereas the other chamber portion is usually occupied by a pressurised gas, whose pressure is often adjustable, so as to ensure a rapid return of the oil from the compensator back to the inner circuit of the telescopic system when the latter is making the extension stroke, also to avoid cavitation phenomena within said circuit. From above it results that compensators of the known type substantially involve a problem of space and they normally require a pressurisation chamber opposite to the one occupied by the oil.

The present invention aims at overcoming these and other disadvantages of the known art by means of the following solution idea. At least one tubular, flexible and preferably elastic, impermeable and oil-resistant braiding is fitted on the outside lateral surface of the cylinder in the telescopic system, said braiding being seal-fastened with its ends onto said cylinder, for instance by means of bands or other suitable means, so as to form at its interior a compensation chamber with changing volume, said chamber being connected to at least one of the inner chambers of the telescopic system, for instance to the chamber with the larger volume, by means of holes on the ends of said chamber. The compensator thus obtained presents extremely limited overall dimensions and does not require a pressurisation from outside since its emptying is substantially helped by the elastic memory of the braiding which forms same.

Further features of the present invention and the advantages deriving therefrom them will become more evident from the following description of some preferred embodiments, shown by way of non-limiting example in the figures of the attached drawing sheets, in which:
- Fig 1 shows a schematic longitudinal section of a shock absorber equipped with the compensator according to the present invention;
- Fig. 2 and 3 show possible outside structures of the wall supporting the elastic braiding of the compensator;
- Fig. 4 and 5 show a longitudinal section, divided into two portions, of a fork leg, particularly suitable for the so-called mountain bikes or for other two-wheel vehicles.

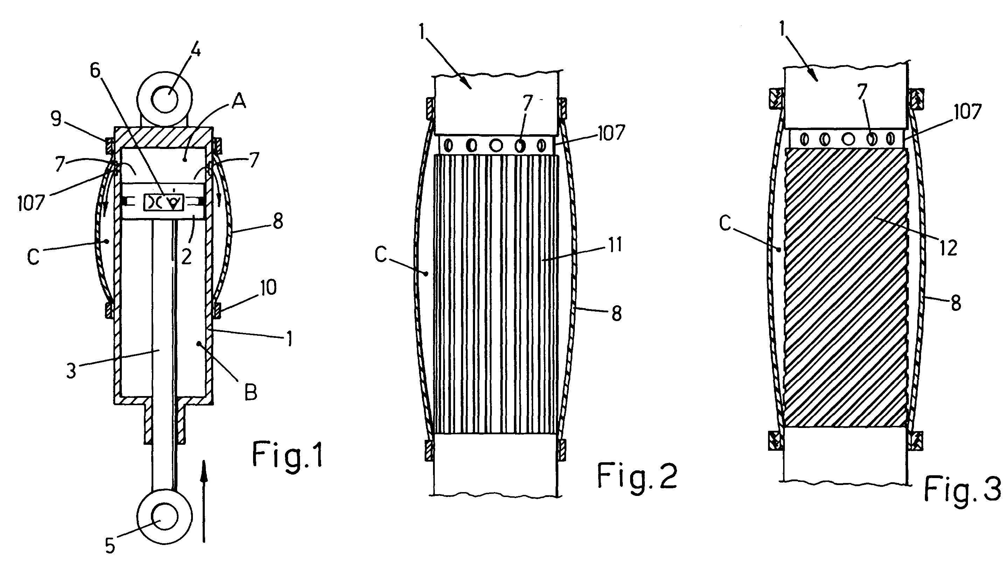

In Fig.1 the numeral 1 indicates the cylinder of a shock absorber, closed at one end and containing a piston 2 connected to a stem 3 which comes out of the other end of the cylinder 1 axially and with lateral seal, said piston running with lateral seal within the cylinder. The numerals 4 and 5 indicate the attachments of the shock absorber with two points of the mechanism to be cushioned, said points being usually reciprocally urged apart by elastic means, not shown here, so that the shock absorber in its rest position shows the stem 3 extending from the cylinder 1. The inside chambers A and B of the cylinder 1, defined by the opposite sides of the piston 2, are filled with oil or of any other suitable liquid, and on the piston 2 valve means of any suitable type, also differing from those schematically indicated with the numeral 6, are provided, said means being possibly adjustable and controlling the passage of oil between the chambers A and B during the extension and retraction stroke of the stem 3, so as to ensure the necessary cushioning of the stresses to which the telescopic system is subjected.

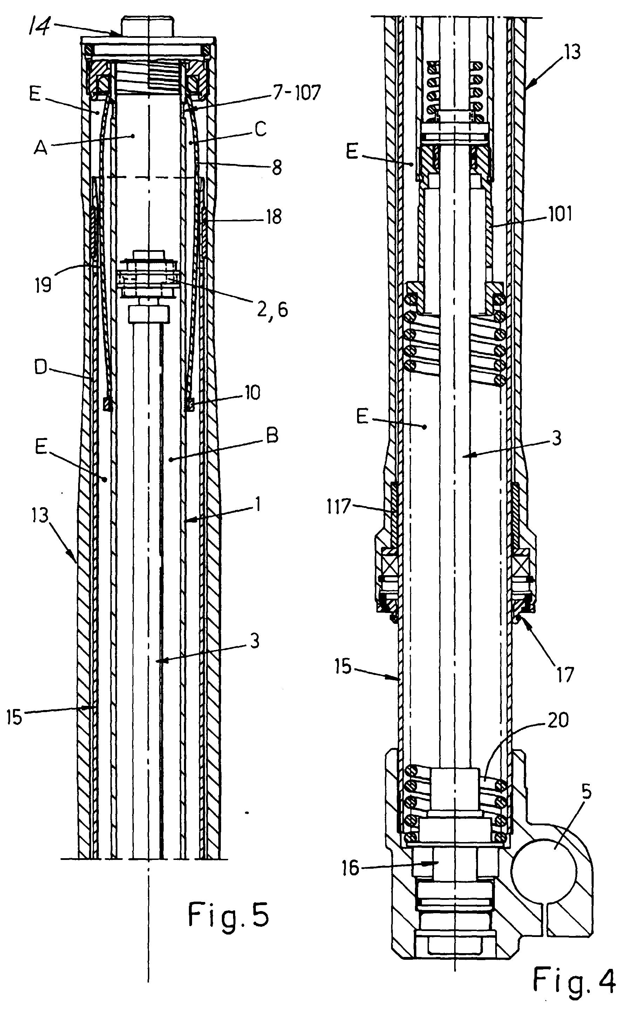

In order to compensate the various volume changes in the chambers A and B, said the chamber A being larger in volume than the chamber B since it is not occupied by the stem 3, the present invention provides, for instance, lateral holes 7 on the base of the chamber with the larger volume A and, mounted outside the cylinder 1, an impermeable braiding 8, said braiding being flexible and preferably made of any suitable, elastomeric and oil-resistant material, having suitable length and thickness and being seal-fastened by its ends onto the cylinder 1, for instance with centripetal clamping means 9 and 10, for instance with bands or groups of cone-shaped rings with different hardness, whose contact surfaces are provided with anti-unthreading grooves (Fig. 3), similar to those which are used for the reciprocal seal-connection of pipes within hydraulic circuits, so that said braiding 8 and the outside wall of the cylinder 1 onto which said braiding is placed form together a compensation chamber C sealed outwards, which can change in volume because of the flexibility and elasticity of said braiding 8 and which communicates with the chamber A of the shock absorber through the holes 7. In order to ensure a correct closure of the ends of the braiding 8, its ends and/or the portions touching the cylinder 1 or the clamping means 9, 10 can be shaped in any suitable way. Also the chamber C is filled with oil. In particular, when the stem 3 is in its extended or rest position, the chamber C presents the smallest volume. When the stem 3 is retracted, the oil partly flows from the chamber A to the chamber B through the valve means 6 of the piston 2, and the surplus flows into the compensation chamber C through the holes 7. This oil will then go back to the chamber A when the stem 3 makes its extension stroke. At this latter stage the oil should freely flow into the chamber A without causing cavitation phenomena, which are prevented by the elasticity of the braiding 8 and the wide passage formed by the holes 7.

To ensure the free flowing of the oil between the chambers A and C it is preferably provided that the holes 7 open into an outside ring-shaped recess 107 of the cylinder 1 and it can also be provided that into such recess small grooves open, said grooves taking up the whole length or part of the outside surface of the cylinder 1 forming said chamber C, for instance small rectilinear grooves 11 as shown in Figure 2 or small helicoidal grooves 12 as shown in Figure 3. The longitudinal grooves 11 or 12 can also be provided onto an intermediate portion of the inside lateral surface of the braiding 8. According to another form of embodiment, as an alternative to or combined with the solution shown in Figures 2 or 3, it can be provided that the outside lateral surface of the cylinder 1 is suitably conically shaped in the portion which forms the chamber C, or it can be provided that the braiding 8 is carried out with a different elasticity along its length, so as to avoid that during its elastic contraction the braiding 8 blocks the holes 7, at least until the chamber C becomes empty.

If the braiding 8 has to be used for shock absorbers or telescopic systems where it could be visible, it can be provided for means to protect the diaphragm itself, for instance by means of a flexible sheath, possibly bellows-like, made of any material suitable for this purpose.

With reference to Figures 4 and 5 there is described the application of the above discussed improvements to one of the legs of a fork, in particular for mountain bikes, said fork consisting of two identical cushioned telescopic legs, connected one to the other at their upper end by means of transverse members supporting the axis of the handlebar and provided on their lower end with the attachments for the connection to the wheel hub. In such figures the numeral 13 indicates the sheath or outer sliding tube, that is, the tubular element with the larger section of the leg, said sheath being closed on its upper end by means of a plug 14 and containing the tubular stem or inner sliding tube 15 running telescopically within the sheath, said tubular stem 15 being closed on its lower end by means of a plug 16 and being provided with the extension 5 for the connection with the wheel axis. In the example shown the sheath 13 is provided on its lower end with a sealing system 17 and with a guiding ring 117 with an inside diameter which is smaller than the diameter of the sheath itself, said guiding ring containing the stem 15 running within it with lateral seal, said stem 15 being provided on its upper end with an outside ring 18 sliding with seal on the lateral surface of the sheath itself, so that the running surface for the portions 13 and 15 is limited to the surface of the rings 117 and 18 and so that there is a ring-shaped chamber D between the two portions, said chamber D communicating constantly with the inside chamber E of the telescopic system 13, 15 through the holes 19 obtained on the upper end of the stem 15 under the sliding ring 18. Through the holes 19 the chamber D can freely suck up or let out air from or into chamber E and it can receive a small amount of oil for the lubrication of the relatively movable surfaces of the portions 13 and 15 from said chamber E. The chamber E of the leg is partly occupied by the lubricating oil, preferably of the high-density type, which can reach the holes 19 with the periodical overturning of the fork and because of the emulsification of the oil itself with the air contained in the chamber E.

The plug 14 closes the end of the cylinder 1 of a shock absorber as described in Figure 1, placed, within the telescopic system 13, 15, coaxially with the stem 3 which may be oriented in the same direction as the stem 15 and integral with the group formed by the plug 16 together with the coupling 5. On the plug 16 adjusting means can be provided, which are not shown here since they have no influence for the understanding of the present invention, to adjust the valve means 6 placed on the piston 2 of the shock absorber. Other adjusting means, which are not shown either, can be provided on the plug 14, whose purpose is to adjust possible valve means placed within the chamber A of the shock absorber, said means not being shown either, whose purpose is to adjust the position of the fork formed by said legs, during both the compression and the extension stage.

The fork leg is completed by the holes 7 together with the outside ring-shaped recess 107 on the upper end of the cylinder 1 and the impermeable, flexible and elastic braiding 8 outside said cylinder 1, fastened with its ends onto said cylinder by means of the clamping elements 9 and 10. The braiding is shaped in such a way as not to interfere with the upper end of the sheath 15 of the telescopic shaft. The chambers A, B and C of the shock absorber are filled with a low-viscosity liquid, which is sufficiently stable to changes in the fork operating temperature. Thanks to the braiding 8 the lubricating oil located in chamber E of the telescopic system 13, 15 will never mix with the oil in the circuit of the shock absorber cartridge. An elastic means 20 consisting for instance of a spring or of a group of elastomer elements is provided within the stem 15, outside the stem 3 of the shock absorber, bearing with one end onto the bottom of the stem 15 and with the other end onto a cup 101 of the cylinder 1, so as to urge to extension the fork leg. It is understood that the fork shaft shown in Figures 4 and 5 can also be reversed, that is to say, with the stem 15 oriented upwards and connected to the bike handlebar and with the sheath 13 oriented downwards and connected to the wheel axis of the bike itself, thus resulting in a better lubrication of the portions 13, 15, even with a small amount of oil within the chamber E. It is also understood that the shock absorber equipped with the compensator can be fitted into the telescopic system 13, 15 with a reversed orientation with respect to the orientation shown in Figures 4 and 5. Finally, it is evident how the pressure within chamber E of the fork improves the elastic recovery of the braiding 8 and how it can even allow the use of a braiding whose only feature is flexibility.

## Claims

1. Shock absorber or telescopic suspension, equipped with built-in compensator, of the type comprising a cylinder (1) filled with liquid such as oil, closed on one end, which is usually arranged for the connection (4) to a point of the mechanism to be cushioned, and traversed at the other end with lateral seal by a stem (3) connected by its outer end to the second point of the mechanism to be cushioned, while said stem, with its other end, is fastened to a piston (2) running with lateral seal within the cylinder and supporting valve means (6) to check the oil flow between the two inner chambers (A, B) of the cylinder when the stem is moved to its extended or retracted position, while a compensator provides for the compensation of the various volume variations in said chambers, characterised in that the compensator consists of at least one flexible, impermeable and chemically oil-resistant braiding (8), mounted so as to enclose said cylinder in its whole length or part of it, and which is seal-fastened by its ends onto said cylinder by means of suitable clamping means (9, 10) and forming, with the cylinder itself, an auxiliary chamber (C) with variable volume, occupied by oil and communicating by means of holes (7) provided on the cylinder (1) with at least one of the inner chambers of the cylinder itself, for instance the chamber with the larger volume (A), so as to compensate the various volume changes in such chambers during the operation of the shock absorber.

2. Shock absorber according to claim 1, in which the braiding (8) is flexible and elastic and it consists, for instance, of at least one tubular body made of a suitable elastomeric material.

3. Shock absorber according to the claim 2, in which the braiding (8) made of elastomeric material can be coated with a flexible sheath made of any suitable protective material, eventually bellows-like.

4. Shock absorber according to claim 1, in which the fastenings means of the ends of the braiding (8) to the cylinder (1) are centripetal clamping means, for instance bands, straps or rings surmounted by other rings, with cone-shaped coupling and anti-unthreading grooves.

5. Shock absorber according to the previous claims, in which the ends of the braiding and/or the cylinder portions onto which said ends of the braiding bear can be profiled in any suitable way so as to ensure the best co-operation of the braiding itself, also as far as sealing is concerned, with the fastening means (9, 10) and/or with the supporting cylinder (1).

6. Shock absorber according to claim 1, in which the holes (7) through which the compensation chamber (C) communicates with the inside circuit (A) of the shock absorber itself, are placed at one end of said chamber and located within a ring-shaped recess (107) of the cylinder (1).

7. Shock absorber according to claim 6, in which at said ring-shaped recess (107) there open the ends of small longitudinal grooves (11, 12) occupying the whole length or part of the cylinder (1) portion enclosed by the expansion braiding (8).

8. Shock absorber according to claim 7, in which said longitudinal grooves (11, 12) can be provided on the inside lateral surface of the braiding (8).

9. Shock absorber according to claim 2, in which the elastic expansion braiding (8) shows a different elasticity in its length.

10. Shock absorber according to claim 2, in which the surface portion of the cylinder (1) onto which the braiding (8) is fitted is conical.

11. Shock absorber according to the previous claims, characterised in that it is mounted within a sheath (13) and a stem (15), connected one to the other telescopically and forming the leg of a fork of a mountain bike or any other two-wheel vehicle, with the cylinder (1) fastened for instance to the end (14) of the sheath and with the stem (3) fastened for instance to the end of the stem (15) of said fork leg and with an elastic means (20), consisting for instance of a helicoidal spring or of elastomer elements, which urge the whole system to extension, the whole in such a manner that the compensation braiding (8) is protected within the leg, the inside chamber or chambers (D, E) of the leg itself being suitably pressurised with respect to atmospheric pressure and being equipped with a suitable amount of lubricating oil which is kept separate from the oil in the inside circuit of the shock absorber by means of said braiding (8).
